# EUROPÄISCHE PATENTSCHRIFT

(11) **EP 2 373 907 B1**
(45) Veröffentlichungstag und Bekanntmachung des Hinweises auf die Patenterteilung: **16.04.2014**
(21) Anmeldenummer: 09743840.2
(22) Anmeldetag: 24.09.2009
(51) Int. Cl.: F16F 15/134, F16F 15/14

(54) **DÄMPFUNGSEINRICHTUNG MIT FLIEHKRAFTPENDEL**
DAMPING DEVICE HAVING CENTRIFUGAL FORCE PENDULUM
DISPOSITIF D'AMORTISSEMENT AVEC PENDULE À FORCE CENTRIFUGE

(30) Priorität: 08.12.2008 DE 102008060692; 22.06.2009 DE 102009029730
(43) Veröffentlichungstag der Anmeldung: 12.10.2011
(73) Patentinhaber: Schaeffler Technologies GmbH & Co. KG, 91074 Herzogenaurach (DE)
(72) Erfinder: REIK, Wolfgang, 77815 Bühl (DE); MENDE, Hartmut, 77815 Bühl (DE); KROLL, Jürgen, 77815 Bühl (DE); KOOY, Ad, 77886 Lauf (DE)
(86) Internationale Anmeldenummer: PCT/DE2009/001343
(87) Internationale Veröffentlichungsnummer: WO 2010/066218

(56) Entgegenhaltungen:
- EP-A2- 1 744 074
- DE-A1- 10 224 874
- DE-A1-102004 011 830

## Beschreibung

Die Erfindung betrifft eine Dämpfungseinrichtung mit zwei aufeinander entgegen der Wirkung zumindest eines Energiespeichers begrenzt verdrehbar gelagerten Schwungmassen mit einem an einem der Schwungmasse wirksam angeordneten Fliehkraftpendel. Das Dokument DE 10 224 874 A1 zeigt eine derartige Dämpfungseinrichtung.

Bevorzugte Einsatzbereiche der Erfindung sind geteilte Schwungräder wie Zweimassenschwungräder und hierzu ähnliche Dämpfungseinrichtungen, wie sie beispielsweise in Verbindung mit hydrodynamischen Drehmomentwandlern, Doppelkupplungsdämpfungseinrichtungen und Dämpfungseinrichtungen in Umschlingungsmittelgetrieben und dergleichen eingesetzt werden. Derartige Dämpfungseinrichtungen weisen zwei aufeinander gelagerte, um eine gemeinsame Drehachse verdrehbare Scheibenteile wie Schwungmassen auf, die entgegen der Wirkung zumindest eines Energiespeichers, beispielsweise über den Umfang verteilten Schraubenfedern wie Bogenfedern relativ gegeneinander verdrehbar sind. Einem der Scheibenteile, vorzugsweise dem sekundären, also dem Getriebe zugewandten Scheibenteil ist ein Fliehkraftpendel zugeordnet, das üblicherweise aus einem mit dem Scheibenteil wie Schwungmasse verbundenen Pendelflansch und zu diesem verschwenkbaren Pendelmassen gebildet ist. Der Pendelflansch trägt dabei die Pendelmassen axial einseitig oder beidseitig über gemeinsame Wälzkörper, die auf entsprechenden Laufbahnen von Ausschnitten im Pendelflansch und Pendelmassen abwälzen. Dabei trägt die Masse des Pendelflansches nicht zur Schwingungstilgung bei, beansprucht jedoch radialen und axialen Bauraum. Dadurch ist die frei schwingende Pendelmasse um die Materialbreite des Pendelflansches reduziert, wodurch die erreichbaren Massenträgheiten der Pendelmassen bauraumbedingt stark begrenzt sind und infolge dessen der Wirkungsgrad des Fliehkraftpendels reduziert wird.

Der Erfindung liegt daher die Aufgabe zugrunde, eine Lösung für eine Dämpfungseinrichtung mit einem Fliehkraftpendel vorzuschlagen, das Verhältnis von verschwenkbaren und nicht verschwenkbaren Massen des Fliehkraftpendels in einem vorgegebenen Bauraum günstiger zu gestalten.

Die Aufgabe wird durch eine Dämpfungseinrichtung mit zwei entgegen der Wirkung zumindest eines in einem radial außen angeordneten Ringraum untergebrachten Energiespeichers begrenzt gegeneinander verdrehbaren und aufeinander gelagerten Schwungmassen und einem einer Schwungmasse wirksam zugeordneten Fliehkraftpendel mit mehreren über den Umfang verteilten Pendelmassen gelöst, wobei die Pendelmassen radial innerhalb und innerhalb des axialen Bauraums des Ringraums radial außen begrenzt verschwenkbar an einem mit der Schwungmasse wirksam verbundenen Aufnahmeprofil mittels Wälzkörpern abgestützt sind. Durch diese Anordnung kann auf einen Pendelflansch verzichtet werden. Die Tragekräfte und Abstützkräfte für die Pendelmassen werden dabei von der Schwungmasse übernommen, der das Fliehkraftpendel wirkungsseitig zugeordnet ist. Dies ist vorzugsweise die sekundäre Schwungmasse. Die Aufnahme des Ringraums erfolgt dabei axial beabstandet zu der Schwungmasse. Die Beaufschlagungseinrichtungen der Energiespeicher werden durch die Bauteile des Ringraums gebildet, so dass auch ein gegebenenfalls radialen Bauraum beanspruchendes sekundäres Flanschteil entfällt, so dass der komplette Bauraum radial innerhalb des Ringraums zur Ausbildung von Pendelmassen zur Verfügung steht, der mit einer entsprechend erhöhten axialen Breite und einer damit verbundenen, den Wirkungsgrad des Fliehkraftpendels steigernden Masseanhäufung der Pendelmassen genutzt werden kann.

Eine vorteilhafte Ausführungsform einer derartigen Dämpfungseinrichtung weist einen Ringraum auf, der aus einem radial inneren Formteil gebildet ist, das die Energiespeicher in Umfangsrichtung beaufschlagt und vorzugsweise der zweiten Schwungmasse, die in diesem Falle das Fliehkraftpendel trägt, beziehungsweise mit diesem wirkungsmäßig verbunden ist. Der Ringraum wird durch ein radial äußeres Formteil komplettiert, das in diesem Fall der primären Schwungmasse zugeordnet ist. Es hat sich als besonders vorteilhaft gezeigt, das radial innere Formteil radial außerhalb des Fliehkraftpendels anzuordnen, so dass vorteilhafterweise keine Verbindungsbauteile, die nicht zur Funktion des Fliehkraftpendels beitragen, in den Bauraum radial innerhalb des Ringraums einragen. Das radial innere Formteil kann beispielsweise mittels Nieten an der sekundären Schwungmasse befestigt sein. Es versteht sich, dass in speziellen Anwendungsfällen auch die primäre Schwungmasse das Fliehkraftpendel tragen kann. Hierbei kann der primären Schwungmasse das radial innere Formteil zugeordnet sein.

Es hat sich als vorteilhaft gezeigt, wenn das Aufnahmeprofil für das Fliehkraftpendel direkt von dem radial inneren Formteil angesteuert beziehungsweise mitgenommen wird. Dabei kann das Aufnahmeprofil in das radial innere Formteil integriert ist, indem dieses beispielsweise entsprechend umgeformt ist oder mit entsprechenden Einlegeteilen zur Bildung der Laufbahnen für die Wälzkörper ausgestattet ist. Alternativ kann das Aufnahmeprofil in einem vorzugsweise gehärteten, separaten Ringteil vorgesehen sein, das drehfest mit dem radial inneren Formteil beispielsweise verstemmt, vernietet, verschweißt, geschrumpft oder in anderer Weise verbunden ist. Dabei sind an dem radial äußeren Außenumfang der Pendelmassen zu den Laufbahnen des Aufnahmeprofils komplementäre Laufbahnen ausgebildet. Zwischen den Laufbahnen der Pendelmassen und des Aufnahmeprofils wälzen Wälzkörper wie Kugeln, Rollen oder dergleichen ab, die eine begrenzte Verlagerung der Pendelmassen gegenüber dem Aufnahmeprofil erlauben, wodurch bei einem Eintrag von Drehschwingungen der Schwerpunkt der Pendelmassen gegenüber dem Aufnahmeprofl und damit gegenüber der Drehachse der Dämpfungseinrichtung geändert wird und die eingetragene Schwingungsenergie entsprechend der Schwingungsgleichungen zumindest teilweise getilgt wird. Es hat sich als vorteilhaft erwiesen, pro Pendelmasse zwei Laufbahnen und damit zwei dynamische Lagerstellen entlang der Laufbahnen für jede Pendelmasse vorzusehen. Es können zwei bis sechs Pendelmassen vorgesehen werden, in bevorzugter Weise werden vier über den Umfang verteilte Pendelmassen vorgesehen.

Dabei werden bei sich um die Drehachse drehender Dämpfungseinrichtung die Pendelmassen infolge Fliehkraft nach radial außen gegen das Aufnahmeprofil gepresst, so dass weitere Vorkehrungen zur Stabilisierung der Pendelmasse nach radial innen nur bei stillstehender Dämpfungseinrichtung zu treffen sind. Hierzu können radial innerhalb der Pendelmassen Abstützelemente vorgesehen sein, an denen sich die Pendelmassen im Stillstand der Dämpfungseinrichtung unter Ausbildung eines Radialspiels zu den Wälzkörpern radial abstützen. Die Abstützelemente sind radial gegenüber den in Eingriff mit den Wälzkörpern und Laufbahnen des Aufnahmeprofils befindlichen Pendelmassen spielbehaftet zu den Pendelmassen beabstandet, so dass während einer Drehung der Dämpfungseinrichtung kein Kontakt zu diesen besteht. Zur Ausbildung eines an einen Punktkontakt angenäherten Kontakts der im Stillstand über der Drehachse angeordneten Pendelmasse zu erzielen, können die Abstützelemente kuppenförmig mit zu diesen komplementären Kuppen der Pendelmassen ausgebildet sein.

In vorteilhafter Weise werden die Abstützelemente in ein Ringteil eingebunden, das mit der das Fliehkraftpendel tragenden Schwungmasse verbunden, beispielsweise vernietet ist. Es hat sich dabei als vorteilhaft gezeigt, wenn eine radial innerhalb des Ringteils angeordnete, zwischen den beiden Schwungmassen wirksame Reibeinrichtung von entsprechenden Eingriffsbereichen der Reibeinrichtung gesteuert wird. Beispielsweise kann eine mit der primären Schwungscheibe verspannte Reibscheibe von dem Ringteil verlagert werden.

Gegen ein unerwünschtes Verlagern der Pendelmassen in Umfangsrichtung insbesondere während eines Stillstands der Dämpfungseinrichtung und/oder als Anschlagpuffer für die Pendelmassen zur Begrenzung des Schwingwinkels der Pendelmassen können in Umfangsrichtung betrachtet zwischen den Pendelmassen in Umfangsrichtung wirksame Energiespeicher angeordnet sein. Hierzu können im Ringteil Aufnahmen wie Bolzen für radial nach außen gerichtete Energiespeicher vorgesehen sein, die beispielsweise als Blattfedern ausgebildet sein können, wobei zwei Blattfederschenkel vorgesehen sein können, von denen jeweils ein Schenkel eine Pendelmasse gegebenenfalls an deren Stirnseite eingreift.

Die Erfindung wird anhand des in den Figuren 1 bis 4 dargestellten Ausführungsbeispiels näher erläutert.

Dabei zeigen:
- Figur 1: eine Teilansicht auf eine Dämpfungseinrichtung mit einem Fliehkraftpendel und
- Figuren 2 bis 4: Teilschnitte durch die Dämpfungseinrichtung der Figur 1.

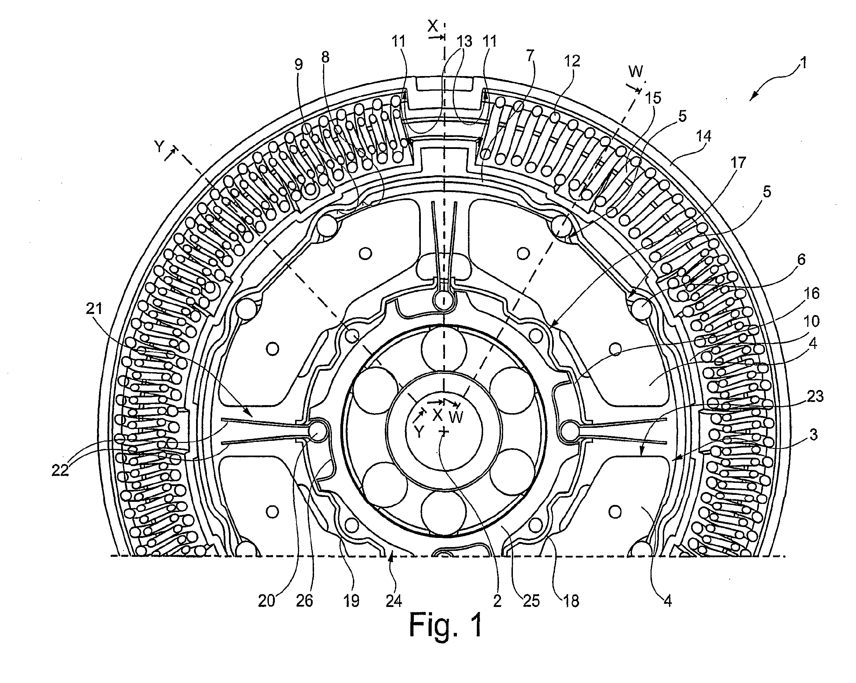

Figur 1 zeigt die Dämpfungseinrichtung 1 in Teilansicht, wobei ein Schnitt senkrecht zur Drehachse 2 gezogen ist und damit die Innenteile der Dämpfungseinrichtung 1 ersichtlich werden. Die Dämpfungseinrichtung 1 enthält ein Fliehkraftpendel 3, das vier über den Umfang verteilte Pendelmassen 4 enthält, die radial außen jeweils zwei Laufbahnen 5 aufweisen, auf denen Wälzkörper 6, die in dem gezeigten Ausführungsbeispiel aus Rollen gebildet sind, abwälzen. Auf der radial gegenüberliegenden Seite ist ein Ringteil 7 vorgesehen, das ein Aufnahmeprofil 8 mit zu den Laufbahnen 5 komplementären Laufbahnen 9 aufweist, auf denen die Wälzkörper 6 ebenfalls abwälzen, so dass die Pendelmasse 4 bis zu einem maximalen Schwenkwinkel gegenüber dem Ringteil 7 verschwenkbar sind.

Das Ringteil 7 ist fest mit dem radial inneren Formteil 10 verbunden, das der sekundären Schwungmasse der Dämpfungseinrichtung 1 zugeordnet ist und Beaufschlagungsbereiche 11 für die als Bogenfedern ausgestalteten Energiespeicher 12 aufweist. Diese werden eingangsseitig durch Beaufschlagungsbereiche 13 eines an die primäre Schwungmasse angeformten, radial äußeren Formteils 14 beaufschlagt. Die beiden Formteile 10, 14 bilden dabei den die Energiespeicher 12 aufnehmenden Ringraum 15. Radial innerhalb des Ringraums 15 ist das Fliehkraftpendel 3 so angeordnet, dass es sich komplett in den axialen vom Ringraum 15 beanspruchten Bauraum eingliedert.

Zur Verhinderung eines unkontrollierten Spiels der Pendelmassen 4 zu den Laufbahnen 9 und einem gegebenenfalls eintretenden Verlust der Wälzkörper 6 bei stillstehender Dämpfungseinrichtung 1 ist radial innerhalb der Pendelmassen 4 ein Ringteil 16 vorgesehen, das Abstützelemente 17 in Form von radial erweiterten Nocken 18 aufweist, die mit komplementären Gegennocken 19 einen Anschlag bilden. Beim Stillstand der Dämpfungseinrichtung 1 bilden dabei nur die oberhalb der Drehachse 2 angeordneten Pendelmassen 4 infolge Schwerkraft einen Anschlag mit den Nocken 18. Im drehenden Zustand der Dämpfungseinrichtung 1 werden die Pendelmassen 4 bereits bei kleinen Drehzahlen infolge Fliehkraft nach radial außen beschleunigt, so dass die bestehenden Anschläge an den Abstützelementen 17 aufgehoben werden.

Das Ringteil 16 ist an der sekundären Schwungmasse befestigt und weist über den Umfang verteilte Bolzen 20 auf, um die radial nach außen gerichtete Schenkel 22 von Blattfedern 21 fest aufgenommen sind. Die Schenkel 22 stützen die Stirnseiten 23 der Pendelmassen 4 in Umfangsrichtung ab, so dass der Schwingwinkel der Pendelmassen 4 elastisch beschränkt wird. Bei einem dauerhaften Anliegen der Pendelmassen 4 kann die Funktion eines sogenannten Federtilgers erzielt werden, so dass eine hybridische Funktion der Dämpfungseinrichtung 1 bezüglich einer Schwingungstilgung wie folgt erreicht wird: Befinden sich die Pendelmassen 4 zwischen den von den Schenkeln 22 bereitgestellten Anschlägen, erfolgt eine Schwingungstilgung nach dem Prinzip eines Fliehkraftpendels, während bei an den Schenkeln 22 anliegenden Pendelmassen 4 eine Tilgung nach dem Federülgungsprinzip erfolgt. Im Weiteren sehen die Schenkel 22 im Stillstand der Dämpfungseinrichtung 1 einen Schutz vor einem Abgleiten der Pendelmassen 4 entlang ihrer Laufbahnen 5 vor.

Radial innerhalb des Ringteils 16 ist eine Reibeinrichtung 24 vorgesehen, die zwischen den beiden Schwungmassen wirksam ist. Dabei ist die Reibscheibe 25 mit der primären Schwungmasse verspannt und wird von den Bolzen 20 mitgenommen. Das Außenprofil 26 ist dabei so ausgestaltet, dass eine Mitnahme der Reibscheibe 25 erst nach einem vorgegebenen Verdrehwinkel erfolgt, also eine verschleppte Reibung gebildet wird.

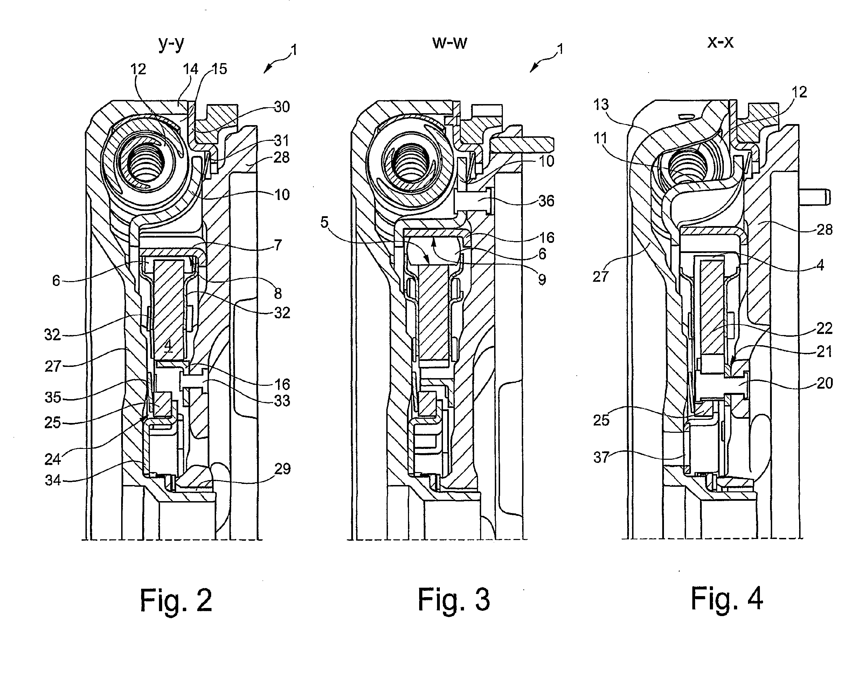

Die nachfolgenden Figuren 2 bis 4 geben einen weiteren Einblick in die Dämpfungseinrichtung in Form der in Figur 1 gezeigten Schnittlinien W-W, X-X und Y-Y. Figur 2 zeigt die Dämpfungseinrichtung 1 entlang der Schnittlinie Y-Y. Die beiden Schwungmassen 27, 28 sind mittels der Lagerung 29 verdrehbar entgegen der Wirkung der Energiespeicher 12 aufeinander gelagert. Das Formteil 14 ist dabei einteilig mit der primären Schwungmasse 27 ausgebildet. Aus der Figur 2 ist weiterhin das den Ringraum 15 bildende Formteil 10 ersichtlich, das gegenüber einem an dem Formteil 14 aufgenommenen Ringteil 30 mittels einer tellerfederartigen Dichtung 31 den zumindest teilweise mit Fett befüllten Ringraum 15 abdichtet.

Aus Figur 2 ist weiterhin das Ringteil 7 mit dem Aufnahmeprofil 8 ersichtlich, auf dem an den nicht einsehbaren Laufbahnen die Pendelmassen 4 unter Zwischenlegung der rollenförmigen Wälzkörper 6 abwälzen. Zum Schutz der Wälzkontakte werden die Pendelmassen von Dichtscheiben 32 flankiert.

Das Ringteil 16 zur Abstützung der Pendelmassen 4 während eines Stillstands der Dämpfungseinrichtung 1 ist mittels der Niete 33 an der sekundären Schwungmasse 28 verbunden. Die Reibscheibe 25 der Reibeinrichtung 24 ist mittels eines Halters 34 an der primären Schwungmasse 27 aufgenommen und mittels des axial wirksamen Energiespeichers 35 wie Tellerfeder mit dieser axial verspannt.

Der Schnitt der Dämpfungseinrichtung 1 längs der Schnittlinie W-W der Figur 3 zeigt die Befestigung des Formteils 10 an der sekundären Schwungmasse 28? mittels der Niete 36. Weiterhin wird die Anlage des Ringteils 16 an dem Formteil 10 deutlich. Die Befestigung der beiden Teile gegeneinander kann beispielsweise durch Aufschrumpfen des Formteils auf das vorzugsweise gehärtete Ringteil 16 oder Verschweißen, Verstemmen oder dergleichen erfolgen.

In dem gezeigten Schnitt der Figur 3 sind weiterhin die Laufbahnen 5, 9 und der geschnittene rollenförmige Wälzkörper 6 ersichtlich.

Der Schnitt entlang der Schnittlinie X-X der Figur 4 zeigt die Beaufschlagung der Energiespeicher 12 durch die Beaufschlagungsbereiche 11, 13 der Schwungmassen 27, 28. Weiterhin ist ein zwischen die Pendelmassen 4 eingreifender Schenkel 22 der um den Bolzen 20 gewickelten und an diesem befestigten Blattfeder 21 ersichtlich. Die Bolzen 20 sind an der sekundären Schwungmasse 28 befestigt und ragen axial in den Raum radial außerhalb der Verschraubungsöffnungen 37 der Dämpfungseinrichtung 1 ein und beaufschlagen bei einer Verdrehung der beiden Schwungmassen 27, 28 gegeneinander die Reibscheibe 25, so dass diese nach Aufbrauch des Verdrehspiels unter Ausbildung des von dem Energiespeicher 35 (Figur 2) bewirkten Reibmoments verdreht wird.

### Bezugszeichenliste

- 1: Dämpfungseinrichtung
- 2: Drehachse
- 3: Fliehkraftpendel
- 4: Pendelmasse
- 5: Laufbahn
- 6: Wälzkörper
- 7: Ringteil
- 8: Aufnahmeprofil
- 9: Laufbahn
- 10: Formteil
- 11: Beaufschlagungsbereich
- 12: Energiespeicher
- 13: Beaufschlagungsbereich
- 14: Formteil
- 15: Ringraum
- 16: Ringteil
- 17: Abstützelement
- 18: Nocken
- 19: Gegennocken
- 20: Bolzen
- 21: Blattfeder
- 22: Schenkel
- 23: Stirnseite
- 24: Reibeinrichtung
- 25: Reibscheibe
- 26: Außenprofil
- 27: Schwungmasse
- 28: Schwungmasse
- 29: Lagerung
- 30: Ringteil
- 31: Dichtung
- 32: Dichtscheibe
- 33: Niet
- 34: Halter
- 35: Energiespeicher
- 36: Niet
- 37: Verschraubungsöffnung
- W-W: Schnittlinie
- X-X: Schnittlinie
- Y-Y: Schnittlinie

## Patentansprüche

1. Dämpfungseinrichtung (1) mit zwei entgegen der Wirkung zumindest eines in einem radial außen angeordneten Ringraum (15) untergebrachten Energiespeichers (12) begrenzt gegeneinander verdrehbaren und aufeinander gelagerten Schwungmassen (27, 28) und einem einer Schwungmasse (28) wirksam zugeordneten Fliehkraftpendel (3) mit mehreren über den Umfang verteilten Pendelmassen (4), **dadurch gekennzeichnet, dass** die Pendelmassen (4) radial innerhalb und innerhalb des axialen Bauraums des Ringraums (15) radial außen begrenzt verschwenkbar an einem mit der Schwungmasse (28) wirksam verbundenen Aufnahmeprofil (8) mittels Wälzkörpern (6) abgestützt sind.

2. Dämpfungseinrichtung (1) nach Anspruch 1, **dadurch gekennzeichnet, dass** der Ringraum (15) aus einem radial inneren, der das Fliehkraftpendel (3) tragenden Schwungmasse (28) zugeordneten Formteil (10) und einem radial äußeren, der anderen Schwungmasse (27) zugeordneten Formteil (14) gebildet ist, wobei das radial innere Formteil (10) mit der Schwungmasse (28) radial außerhalb des Fliehkraftpendels (3) fest verbunden ist.

3. Dämpfungseinrichtung nach Anspruch 2, **dadurch gekennzeichnet, dass** das Aufnahmeprofil in das radial innere Formteil integriert ist.

4. Dämpfungseinrichtung (1) nach Anspruch 2 oder 3, **dadurch gekennzeichnet, dass** das Aufnahmeprofil (8) in einem Ringteil (7) vorgesehen ist, das drehfest mit dem radial inneren Formteil (10) verbunden ist.

5. Dämpfungseinrichtung (1) nach einem der Ansprüche 1 bis 4, **dadurch gekennzeichnet, dass** radial innerhalb der Pendelmassen (4) Abstützelemente (17) vorgesehen sind, an denen sich die Pendelmasse (4) während eines Stillstands der Dämpfungseinrichtung (1) unter Ausbildung eines Radialspiels zu den Wälzkörpern (6) radial abstützen.

6. Dämpfungseinrichtung (1) nach Anspruch 5, **dadurch gekennzeichnet, dass** die Abstützelemente (17) aus einem Ringteil (16) gebildet sind, das mit der das Fliehkraftpendel (3) tragenden Schwungmasse (28) verbunden ist.

7. Dämpfungseinrichtung (1) nach Anspruch 6, **dadurch gekennzeichnet, dass** radial innerhalb des Ringteils (16) eine zwischen den beiden Schwungmassen (27, 28) wirksame Reibeinrichtung (24) angeordnet ist, deren Reibscheibe (25) mit einer Schwungmasse (27) axial verspannt und von der anderen Schwungmasse (28) gesteuert wird.

8. Dämpfungseinrichtung (1) nach einem der Ansprüche 1 bis 7, **dadurch gekennzeichnet, dass** in Umfangsrichtung betrachtet zwischen den Pendelmassen (4) in Umfangsrichtung wirksame Energiespeicher angeordnet sind, die die Verlagerung der Pendelmassen (4) in Umfangsrichtung begrenzen.

9. Dämpfungseinrichtung (1) nach Anspruch 8, **dadurch gekennzeichnet, dass** die Energiespeicher durch radial innen an Bolzen (20) befestigte und sich nach radial außen erstreckende Blattfedern (21) mit zwei Schenkeln (22) gebildet sind.

10. Dämpfungseinrichtung (1) nach Anspruch 7 und 9, **dadurch gekennzeichnet, dass** die Reibscheibe (25) der Reibeinrichtung (24) axial mit der primären Schwungmasse (27) verspannt ist und von den an der sekundären Schwungmasse (28) befestigten Bolzen (20) gesteuert wird.

## Claims

1. Damping device (1) with two flywheel masses (27, 28) mounted one on the other and rotatable to a limited extent with respect to one another counter to the action of at least one energy accumulator (12) accommodated in an annular space (15) arranged radially on the outside, and with a centrifugal force pendulum (3) assigned actively to a flywheel mass (28) and having a plurality of pendulum masses (4) distributed over the circumference, **characterized in that** the pendulum masses (4) are supported by means of rolling bodies (6) radially inside and inside the axial construction space of the annular space (15), so as to be pivotable to a limited extent radially on the outside on a reception profile (8) connected actively to the flywheel mass (28).

2. Damping device (1) according to Claim 1, **characterized in that** the annular space (15) is formed from a radially inner moulding (10) assigned to the flywheel mass (28) carrying the centrifugal force pendulum (3) and from a radially outer moulding (14) assigned to the other flywheel mass (27), the radially inner moulding (10) being firmly connected to the flywheel mass (28) radially outside the centrifugal force pendulum (3).

3. Damping device according to Claim 2, **characterized in that** the reception profile is integrated into the radially inner moulding.

4. Damping device (1) according to Claim 2 or 3, **characterized in that** the reception profile (8) is provided in an annular part (7) which is connected fixedly in terms of rotation to the radially inner moulding (10).

5. Damping device (1) according to one of Claims 1 to 4, **characterized in that**, radially inside the pendulum masses (4), supporting elements (17) are provided on which the pendulum masses (4) are supported radially during a standstill of the damping device (1), at the same time generating radial play with respect to the rolling bodies (6).

6. Damping device (1) according to Claim 5, **characterized in that** the supporting elements (17) are formed from an annular part (16) which is connected to the flywheel mass (28) carrying the centrifugal force pendulum (3).

7. Damping device (1) according to Claim 6, **characterized in that**, radially inside the annular part (16), a friction device (24) is arranged, which is active between the two flywheel masses (27, 28) and the friction disc (25) of which is braced axially by means of one flywheel mass (27) and is controlled by the other flywheel mass (28).

8. Damping device (1) according to one of Claims 1 to 7, **characterized in that**, as seen in the circumferential direction, energy accumulators active in the circumferential direction are arranged between the pendulum masses (4), which energy accumulators limit the displacement of the pendulum masses (4) in the circumferential direction.

9. Damping device (1) according to Claim 8, **characterized in that** the energy accumulators are formed by leaf springs (21) which are fastened radially on the inside to bolts (20) and extend radially outerwards and which have two legs (22).

10. Damping device (1) according to Claims 7 and 9, **characterized in that** the friction disc (25) of the friction device (24) is braced axially by means of the primary flywheel mass (27) and is controlled by the bolts (20) fastened to the secondary flywheel mass (28).

## Revendications

1. Dispositif d'amortissement (1) comprenant deux masses d'inertie (27, 28) montées l'une sur l'autre et pouvant tourner l'une par rapport à l'autre de manière limitée à l'encontre de l'action d'au moins un accumulateur d'énergie (12) logé dans un espace annulaire (15) disposé radialement à l'extérieur et comprenant un pendule à force centrifuge (3) associé fonctionnellement à une masse d'inertie (28) et pourvu de plusieurs masses pendulaires (4) réparties sur la périphérie, **caractérisé en ce que** les masses pendulaires (4) s'appuient, au moyen de corps de roulement (6), contre un profilé de réception (8) relié fonctionnellement à la masse d'inertie (28), radialement à l'intérieur et à l'intérieur de l'espace de construction axial de l'espace annulaire (15), de manière à pouvoir pivoter dans une mesure limitée radialement à l'extérieur.

2. Dispositif d'amortissement (1) selon la revendication 1, **caractérisé en ce que** l'espace annulaire (15) est formé à partir d'une pièce moulée (10) radialement intérieure associée à la masse d'inertie (28) supportant le pendule à force centrifuge (3) et d'une pièce moulée (14) radialement extérieure associée à l'autre masse d'inertie (27), la pièce moulée (10) radialement intérieure étant reliée solidement à la masse d'inertie (28) radialement à l'extérieur du pendule à force centrifuge (3).

3. Dispositif d'amortissement selon la revendication 2, **caractérisé en ce que** le profilé de réception est intégré dans la pièce moulée radialement intérieure.

4. Dispositif d'amortissement (1) selon la revendication 2 ou 3, **caractérisé en ce que** le profilé de réception (8) est prévu dans une pièce annulaire (7) qui est reliée de manière solidaire en rotation à la pièce moulée (10) radialement intérieure.

5. Dispositif d'amortissement (1) selon l'une quelconque des revendications 1 à 4, **caractérisé en ce que** des éléments d'appui (17) sont prévus radialement à l'intérieur des masses pendulaires (4), contre lesquels éléments d'appui s'appuient radialement les masses pendulaires (4) pendant un arrêt du dispositif d'amortissement (1) en formant un jeu radial par rapport aux corps de roulement (6).

6. Dispositif d'amortissement (1) selon la revendication 5, **caractérisé en ce que** les éléments d'appui (17) sont formés à partir d'une pièce annulaire (16) qui est reliée à la masse d'inertie (28) supportant le pendule à force centrifuge (3).

7. Dispositif d'amortissement (1) selon la revendication 6, **caractérisé en ce qu'**un dispositif de friction (24) agissant entre les deux masses d'inertie (27, 28) est disposé radialement à l'intérieur de la pièce annulaire (16), le disque de friction (25) du dispositif de friction étant serré axialement par une masse d'inertie (27) et étant commandé par l'autre masse d'inertie (28).

8. Dispositif d'amortissement (1) selon l'une quelconque des revendications 1 à 7, **caractérisé en ce que** des accumulateurs d'énergie agissant dans la direction périphérique sont disposés, considéré dans la direction périphérique, entre les masses pendulaires (4), lesquels accumulateurs d'énergie limitent le déplacement des masses pendulaires (4) dans la direction périphérique.

9. Dispositif d'amortissement (1) selon la revendication 8, **caractérisé en ce que** les accumulateurs d'énergie sont formés par des ressorts à lames (21) pourvus de deux branches (22) fixés radialement à l'intérieur à des boulons (20) et s'étendant radialement vers l'extérieur.

10. Dispositif d'amortissement (1) selon les revendications 7 et 9, **caractérisé en ce que** le disque de friction (25) du dispositif de friction (24) est serré axialement par la masse d'inertie primaire (27) et est commandé par les boulons (20) fixés à la masse d'inertie secondaire (28).
